# EUROPÄISCHE PATENTSCHRIFT

(11) **EP 0 755 847 B1**
(45) Veröffentlichungstag und Bekanntmachung des Hinweises auf die Patenterteilung: **15.03.2000**
(21) Anmeldenummer: 96810452.1
(22) Anmeldetag: 12.07.1996
(51) Int. Cl.: B62D 33/04, B62D 31/04

(54) **Baugruppenverbindung**
Connection for built-up structures
Connection de structures assemblées

(30) Priorität: 24.07.1995 CH 217295
(43) Veröffentlichungstag der Anmeldung: 29.01.1997
(73) Patentinhaber: Alusuisse Technology & Management AG, 8212 Neuhausen am Rheinfall (CH)
(72) Erfinder: Leutenegger, Simon, 8915 Hausen am Albis (CH); Warner, Jochen, 8048 Zürich (CH); Bärtsch, René, 5610 Wohlen (CH)

(56) Entgegenhaltungen:
- EP-A- 0 331 865
- DE-A- 3 740 401
- DE-A- 4 318 080
- FR-A- 2 305 682
- GB-A- 805 024
- GB-A- 925 460
- GB-A- 2 220 724
- US-A- 5 218 792

## Beschreibung

Die Erfindung betrifft ein Bauteil nach dem Oberbegriff von Anspruch 1. Im Rahmen der Erfindung liegt auch ein Verfahren zum Zusammenbau von Bauteilen.

Zur Rationalisierung sind Bestrebungen im Gange, Aufbaustrukturen wie Aufbauten oder Wagenkasten von Schienen- und Strassenfahrzeugen aus vollständig ausgerüsteten Baugruppen zusammenzufügen. Damit einerseits auf aufwendige Montagevorrichtungen verzichtet werden kann und andererseits kein Wärmeeintrag durch Schweissen erfolgt, soll beim Zusammenbau von einzelnen Baugruppen nach Möglichkeit nur noch genietet und/ oder geschraubt werden, wobei die Einhaltung der Toleranzen trotzdem gewährleistet sein muss.

Ein Bauteil der eingangs genannten Art ist aus der GB-A-2 220 724 bekannt. Die Ausbildung der Berührungsfläche ermöglicht kein Richten der Profile ohne deren Trennung an der Stossfläche.

Angesichts dieser Gegebenheiten haben sich die Erfinder die Aufgabe gestellt, eine für Bauteile bzw. Baugruppen der eingangs erwähnten Art geeignete Verbindung zu schaffen, mit welcher in Modulbauweise vorgerüstete Baugruppenverbindungen ohne grossen Richtaufwand einfach und kostengünstig zusammengefügt werden können.

Zur erfindungsgemässen Lösung der Aufgabe führen die Merkmale von Anspruch 1.

Die Erfindung weiterbildende Merkmale sind Gegenstand von abhängigen Patentansprüchen. Zur Vereinfachung wird im folgenden der Begriff "Profil" zur Charakterisierung der auch als Anschlussprofil bezeichneten Ausgestaltung der Baugruppen im Verbindungsbereich verwendet.

Die sich mit der Erfindung ergebenden Baugruppenverbindungen haben gegenüber dem konventionellen Zusammenbau von Aufbaustrukturen den Vorteil einer schnellen und dennoch präzisen Montage.

Durch die erfindungsgemässe Krümmung der Anschlussfläche der beiden Profile im Verbindungsbereich ergibt sich die Möglichkeit, die beiden Profile durch eine kleine Verschiebung entlang der gemeinsamen Berührungsfläche, d.h. beispielsweise durch eine leichte Drehung eines der beiden Profile um die Krümmungsachse, auf einfache Weise und ohne grossen Aufwand zu richten.

Bevorzugt sind die Profile mittels die Berührungsfläche querender Nieten in ihrer gegenseitigen Lage kraftschlüssig fixiert. Ein wesentlicher Vorteil der erfindungsgemässen Ausgestaltung der Verbindung liegt darin, dass alle Nieten von derselben Seite her gesetzt werden können. Insbesondere bei Zusammenbau von Wagenkasten aus einzelnen Baugruppen ist es wichtig, dass nicht im Innenraum genietet werden muss.

Zweckmässigerweise bilden die Profile im Randbereich ihrer gemeinsamen Berührungsfläche längslaufende Fugen, in die eine Dichtmasse eingesetzt ist. Diese verhindert das Eindringen von Wasser und damit die Entstehung von Korrosion zwischen den beiden aneinandergrenzenden Profilen.

Damit die Nieten gesetzt werden können, kann es erforderlich sein, dass mindestens eines der Profile entsprechende diskrete Ausfräsungen aufweist.

Bevorzugt bestehen die Baugruppen bzw. deren Anschlussprofile aus einer Leichtmetallegierung, insbesondere aus einer Aluminiumlegierung, aus Kunststoff oder aus einem Leichtmetall/Kunststoff-Verbund.

Bezüglich des Verfahrens führt zur erfindungsgemässen Lösung der Aufgabe, dass die Profile in gegenseitigen Anschlag zueinander gebracht, ggf. durch gleitendes Verschieben entlang der gemeinsamen Berührungsfläche gerichtet, Löcher für die Nieten gebohrt und die Nieten gesetzt werden.

Das Richten, Bohren der Löcher und Setzen der Nieten erfolgt erfindungsgemäss mit einer Montagelehre in einem einzigen Arbeitsgang.

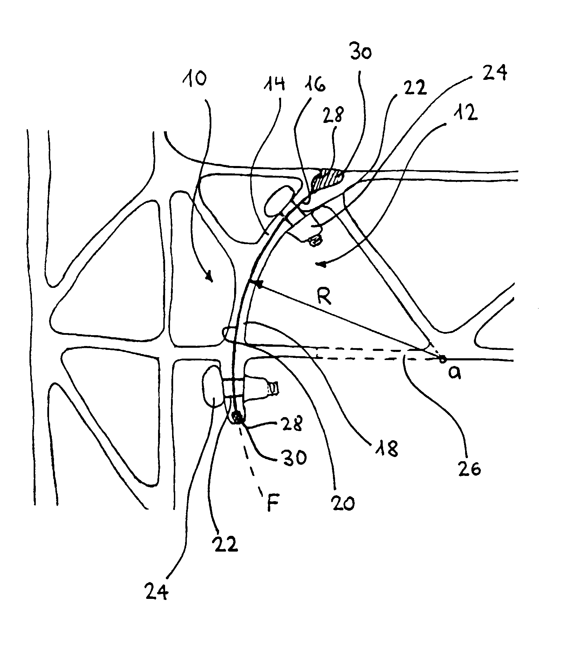

Weitere Vorteile, Merkmale und Einzelheiten der Erfindung ergeben sich aus der nachfolgenden Beschreibung eines bevorzugten Ausführungsbeispiels sowie anhand der Zeichnung; diese zeigt schematisch in ihrer einzigen Figur einen Querschnitt durch eine Baugruppenverbindung.

Die in der Figur dargestellte Ausführungsform einer Baugruppenverbindung zeigt die spezielle Ausbildung der beiden miteinander zu verbindenden Baugruppen im Verbindungsbereich, d.h. an jener Stelle, wo die Baugruppen entlang einer gemeinsamen Stossfläche aufeinandertreffen. Der in der jeweiligen Baugruppe integrierte und profilierte, zum Anschluss an eine nächste Baugruppe vorgesehene Verbindungsteil wird hier auch als Anschlussprofil oder vereinfacht als Profil bezeichnet. In einer Baugruppenverbindung stossen demnach im Verbindungsbereich jeweils zwei Profile von zwei zu verbindenden Baugruppen entlang der gemeinsamen Stossfläche zusammen.

Zwei Profile 10, 12 mit parallel zueinander liegenden Profillängsachsen stossen entlang einer Berührungsfläche F aneinander. Im dargestellten Ausführungsbeispiel ist das Profil 10 Teil der Wand und das Profil 12 Teil des Bodens einer Fahrzeugstruktur. Das Profil 10 weist ein Anschlussteil 14 mit konkaver Krümmungsfläche 16 auf. Entsprechend ist das Profil 12 mit einem Anschlussteil 18 mit konvexer Krümmungsfläche 20 ausgestattet. Die beiden Krümmungsflächen 16, 20 bilden hierbei die gemeinsame Berührungsfläche F. Die Krümmung der beiden Krümmungsflächen 16, 20 weisen einen konstanten Radius R auf und die Krümmungsachse a liegt parallel zu den beiden Profillängsachsen der Profile 10, 12.

Die beiden Anschlussteile 14, 18 sind mit durchgehenden Löchern 22 ausgestattet, die der Aufnahme von Nieten 24 dienen. Damit die Nieten im Profilinnern gesetzt werden können, weist das Profil 12 diskrete Ausfräsungen 26 auf. Die beiden Anschlussteile 14, 18 sind in ihrem Randbereich so geformt, dass sich in Einbaulage Fugen 28 für eine Dichtmasse 30 bilden.

Aus der Figur ist ohne weiteres ersichtlich, dass die beiden Profile 10, 12 durch gegenseitiges Verschieben entlang ihrer gemeinsamen Berührungsfläche F bzw. durch eine leichte Drehung eines der Profile 10, 12 um die Krümmungsachse a ohne grossen Aufwand gerichtet werden können.

Beim Zusammenfügen der beiden Baugruppen werden die beiden Profile 10, 12 zunächst in der oben beschriebenen Weise gerichtet und anschliessend werden im gleichen Arbeitsgang Löcher für die Nieten gebohrt und die Nieten gesetzt.

## Patentansprüche

1. Bauteil, insbesondere eine aus Baugruppen zusammengefügte Aufbaustruktur, mit mindestens zwei entlang einer gemeinsamen Berührungsfläche (F) einander flächig anliegenden und miteinander verbundenen Anschlussprofilen (10,12) mit parallel zueinander liegenden Profillängsachsen, wobei die Berührungsfläche (F) Krümmungen mit parallel zu den Profillängsachsen liegender Krümmungsachse (a) aufweist,
dadurch gekennzeichnet, dass
die Berührungsfläche (F) eine Krümmung mit konstantem Krümmungsradius (R) aufweist, so dass die beiden Profile (10,12) durch gegenseitiges Verschieben entlang ihrer Berühungsfläche (F) bzw. durch Drehen eines der Profile (10,12) um die Krümmungsachse (a) gerichtet werden können.

2. Bauteil nach Anspruch 1, dadurch gekennzeichnet, dass die Profile (10,12) mittels die Berührungsfläche (F) querender Nieten (24) in ihrer gegenseitigen Lage kraftschlüssig fixiert sind.

3. Bauteil nach Anspruch 1 oder 2, dadurch gekennzeichnet, dass die Profile (10,12) im Randbereich ihrer gemeinsamen Berührungsfläche (F) längslaufende Fugen (28) bilden, in die eine Dichtmasse (30) eingesetzt ist.

4. Bauteil nach einem der Ansprüche 1 bis 3, dadurch gekennzeichnet, dass mindestens eines der Profile (12) Ausfräsungen (26) zum Setzen der Nieten (24) aufweist.

5. Bauteil nach einem der Ansprüche 1 bis 4, dadurch gekennzeichnet, dass die Baugruppen bzw. deren Anschlussprofile (10,12) aus einer Leichtmetallegierung, insbesondere aus einer Aluminiumlegierung, aus Kunststoff oder aus einem Leichtmetall/Kunststoffverbund bestehen.

6. Verfahren zum Zusammenbau eines Bauteils nach einem der Ansprüche 1 bis 5, dadurch gekennzeichnet, dass die Profile (10,12) in gegenseitigen Anschlag zueinander gebracht, ggf. durch gleitendes Verschieben entlang der gemeinsamen Berührungsfläche (F) gerichtet, Löcher (22) für die Nieten (24) gebohrt und die Nieten (24) gesetzt werden.

## Claims

1. Component, in particular a structure assembled from modules, comprising at least two connecting profiles (10, 12) with parallel longitudinal axes connected together and bearing flat against one another along a common contact surface (F), the contact surface (F) having curvatures with an axis of curvature (a) situated parallel to the longitudinal axes of the profiles, characterised in that the contact surface (F) has a curvature with a constant radius of curvature (R), so that the two profiles (10, 12) can be aligned by means of mutual displacement along their contact surface (F) or by the rotation of one of the profiles (10, 12) about the axis of curvature (a).

2. Component according to claim 1, characterised in that the profiles (10, 12) are non-positively fixed in their mutual positions by means of rivets (24) traversing the contact surface (F).

3. Component according to claim 1 or claim 2, characterised in that the profiles (10, 12) form longitudinally extending joints (28) into which a sealing compound (30) in inserted in the edge region of their common contact surface (F).

4. Component according to one of claims 1 to 3, characterised in that at least one of the profiles (12) has milled-out portions (26) for the insertion of the rivets (24).

5. Component according to one of claims 1 to 4, characterised in that the modules or the connecting profiles (10, 12) thereof consist of a light-metal alloy, in particular an aluminium alloy, plastic or a light-metal alloy/plastic composite.

6. Process for the assembly of a component according to one of claims 1 to 5, characterised in that the profiles (10, 12) are brought to bear against one another and are possibly aligned by means of sliding displacement along the common contact surface (F), and that holes (22) are bored for the rivets (24) and the rivets (24) are inserted.

## Revendications

1. Composant, en particulier structure assemblée à partir de sous-ensembles, comportant au moins deux profils de raccordement (10, 12) appuyés à plat l'un contre l'autre le long d'une surface de contact commune (F), reliés l'un à l'autre et présentant des axes longitudinaux du profil situés parallèlement l'un à l'autre, dans lequel la surface de contact (F) présente des courbures avec un axe de courbure (a) situé parallèlement aux axes longitudinaux de profil,
caractérisé par le fait
que la surface de contact (F) présente une courbure à rayon de courbure (R) constant, de sorte que l'on peut orienter les deux profils (10, 12) par coulissement mutuel le long de la surface de contact (F) ou par rotation de l'un des profils (10, 12) autour de l'axe de courbure (a).

2. Composant selon la revendication 1, caractérisé par le fait que les profils sont fixés dans leur position mutuelle par serrage au moyen de rivets (24) traversant la surface de contact (F).

3. Composant selon la revendication 1 ou 2, caractérisé par le fait que, dans la zone de bordure de leur surface de contact commune (F), les profils (10, 12) forment des joints (28) orientés longitudinalement dans lesquels est insérée une masse d'étanchéité (30).

4. Composant selon l'une des revendications 1 à 3, caractérisé par le fait qu'au moins l'un des profils (12) présente des fraisures (26) pour poser les rivets (24).

5. Composant selon l'une des revendications 1 à 4, caractérisé par le fait que les sous-ensembles, ou leurs profils de raccordement (10, 12), sont constitués d'un alliage en métal léger, en particulier d'un alliage d'aluminium, de plastique, ou d'un composite métal léger/plastique.

6. Procédé d'assemblage d'un composant selon l'une des revendications 1 à 5, caractérisé par le fait que l'on amène les profils (10, 12) en butée mutuelle l'un contre l'autre, éventuellement par coulissement glissant le long de la surface de contact commune (F), que l'on perce des trous (22) pour les rivets (24) et que l'on pose des rivets (24).
